# EUROPÄISCHE PATENTSCHRIFT

(11) **EP 1 364 696 B1**
(45) Veröffentlichungstag und Bekanntmachung des Hinweises auf die Patenterteilung: **02.07.2008**
(21) Anmeldenummer: 03101498.8
(22) Anmeldetag: 23.05.2003
(51) Int. Cl.: B01D 50/00, B01D 45/08, B01D 46/24, F02M 35/024

(54) **Vorrichtung zur Reinigung eines Gasstromes**
Apparatus for cleaning a gas stream
Dispositif d'épuration d'un courant gazeux

(30) Priorität: 23.05.2002 DE 10222793
(43) Veröffentlichungstag der Anmeldung: 26.11.2003
(73) Patentinhaber: MANN+HUMMEL GmbH, 71638 Ludwigsburg (DE)
(72) Erfinder: Weber, Andreas, 71642 Ludwigsburg (DE); Ponath, Hans, 74394 Hessigheim (DE)

(56) Entgegenhaltungen:
- DE-A- 3 805 718
- US-A- 2 420 840
- US-A- 4 303 423
- US-A- 4 877 431

## Beschreibung

### Stand der Technik

Die Erfindung betrifft eine Vorrichtung zur Reinigung eines Gasstromes nach der Gattung des Anspruches 1.

In der DE 297 09 879 ist eine Vorrichtung zur Reinigung von Gasen offenbart, welche durch einen Zyklon, ein Hüllrohr und ein Filterelement gebildet ist. Das Filterelement, welches konzentrisch in dem, den Zyklon bildenden Gehäuse angeordnet ist, ist von dem Hüllrohr umgeben, wobei das Hüllrohr über luftdurchlässige Perforationen verfügt. Das perforierte Hüllrohr, welches eine gleichmäßige Anströmung des Filterelementes bewirkt, ragt mit seinem unteren Ende in einen kegligen Austrag. Der Zyklon scheidet durch die Fliehkraft größere Partikel aus dem Gas ab. Die kleineren Partikel, welche nicht durch den Zyklon abgeschieden werden, werden durch das Filterelement aus dem Gasstrom entfernt. Da das Hüllrohr das Filterelement umgibt und mit seinem unteren Ende in den kegligen Austrag ragt, wird eine Vermischung der größeren Partikel mit den kleineren Partikeln verhindert, wodurch die Partikel über einen eigenen Austrag getrennt entsorgt werden können.

DE-A-3805718 beschreibt einen Filter zum Reinigen eines Gases.

Nachteilig bei der offenbarten Vorrichtung zur Reinigung eines Gasstromes ist, dass Partikel oder Tropfen, welche sich an dem Hüllrohr abscheiden, durch die Gasströmung durch die Perforationen hindurch mitgerissen werden. Somit gelangen auch größere Partikel durch das Hüllrohr hindurch zu dem Filterelement und können es zusetzen.

Aufgabe der Erfindung ist daher die Schaffung einer Vorrichtung zur Reinigung eines Gasstromes, bei welcher zuverlässig verhindert wird, dass größere Verunreinigungen bis zu dem Filterelement vordringen können. Diese Aufgabe wird durch die Merkmale des Patentanspruches 1 gelöst.

### Vorteile der Erfindung

Die erfindungsgemäße Vorrichtung zur Reinigung eines Gasstromes ist vorzugsweise zur Reinigung von Ansaugluft für eine Brennkraftmaschine vorgesehen. Diese Vorrichtung weist zumindest ein Gehäuse, ein Filterelement und einen Vorabscheider auf. Das Gehäuse verfügt über einen Einlass, durch welchen das zu reinigende Gas in das Gehäuse eintreten, und einen Auslass, durch welchen das zu reinigende Gas aus dem Gehäuse austreten kann. In dem Gehäuse ist ein Filterelement angeordnet, welches eine Reinseite dichtend von einer Rohseite trennt. Die Rohseite ist korrespondierend mit dem Einlass und die Reinseite ist korrespondierend mit dem Auslass verbunden. Zwischen dem Einlass und dem Filterelement ist ein Vorabscheider angeordnet, welcher über parallel zueinander angeordnete Lamellen verfügt. Der Vorabscheider kann in einer beliebigen Lage, z.B. schräg zu dem Filterelement angeordnet sein. Durch die Lamellen wird der zu reinigende Gasstrom in seiner Strömungsrichtung umgelenkt, bevor er auf das Filterelement auftrifft. Durch die Umlenkung des Gasstromes können die in dem Gasstrom enthaltenen größeren Verunreinigungen, wie z.B. Staub-Partikel oder Wasser-Tropfen, aufgrund ihrer Masse der Strömungsumlenkung nicht folgen und werden an den Lamellen abgeschieden. Dadurch werden diese Verunreinigungen nicht mit dem Gasstrom durch den Vorabscheider hindurch zu dem Filterelement getragen. Da weniger Verunreinigungen zu dem Filterelement gelangen, wird dieses weniger belastet. Somit verlängert sich die Standzeit des Filterelementes erheblich. Der beschriebene Vorabscheider ist vorzugsweise als Kunststoffspritzgussteil ausgeführt, wodurch dieser kostengünstig herstellbar ist und nur ein geringes Bauteilgewicht aufweist.

Gemäß einer vorteilhaften Ausgestaltung der Erfindung sind die Lamellen derart ausgestaltet, dass sie sich in einem Teilbereich berührungslos überlappen. Hierbei sind die Lamellen vorzugsweise winklig zu einer Ebene eines flach ausgeführten Vorabscheiders angeordnet, wobei alle Lamellen vorzugsweise im gleichen Winkel zu der Ebene des Vorabscheiders angeordnet sind. Bei gewölbt ausgeführten Vorabscheidern, insbesondere bei zylindrisch ausgebildeten Vorabscheidern, sind die Lamellen winklig zu der gewölbten Fläche bzw. des Zylinders des Vorabscheiders angeordnet. Durch diese Ausgestaltung der Erfindung erfährt der zu reinigende Gasstrom eine stärkere Umlenkung, wobei die Verunreinigungen, welche der Gasströmung nicht folgen können, auf die benachbarte Lamelle auftreffen und sich dort abscheiden.

Es ist vorteilhaft, dass die Lamellen über zwei Lamellenbereiche verfügen, welche winklig zueinander angeordnet sind. Durch diese Ausbildung verfügt jede Lamelle über eine konkave und eine konvexe Seite. Hierbei ist es vorteilhaft, wenn die konkave Seite der Lamelle auf der dem Gasstrom zugewandten Seite des Vorabscheiders und die konvexe Seite der Lamelle auf der dem Filterelement zugewandten Seite des Vorabscheiders angeordnet ist. Die konkave Seite bildet dann eine Ablaufrinne für die Verunreinigungen, wodurch diese in einem vordefinierten Bereich geführt und so in einen Sammelbereich für die Verunreinigungen geleitet werden.

Eine besondere Form der Erfindung sieht vor, dass der Vorabscheider parallel zu dem Filterelement angeordnet ist. Hierbei verfügt der Vorabscheider über eine ähnliche Form wie das Filterelement. Bei gebogen ausgeführten Filterelementen weist dann der Vorabscheider eine ähnliche Biegung wie das Filterelement auf. Dadurch kann der Raum in dem Gehäuse vorteilhaft ausgenutzt werden und das Filterelement wird gleichmäßig belastet.

Gemäß einer Ausgestaltung der Erfindung ist das Filterelement ein Rundfilterelement, wobei das Filterelement konzentrisch von dem Vorabscheider umschlossen ist. Somit wird das Filterelement gleichmäßig angeströmt und eine lokale Überlastung des Filterelementes verhindert.

Gemäß einer Weiterbildung der Erfindung ist das Filterelement und der Vorabscheider exzentrisch in dem zylindrischen Gehäuse angeordnet. Das Gehäuse kann als Zyklon ausgebildet sein, wobei der Einlass tangential an dem Gehäuse angeordnet ist. Dadurch wird der eintretende Gasstrom in Rotation versetzt, wodurch sich grobe Verunreinigungen an der Gehäusewand abscheiden. An dem Vorabscheider werden weitere Verunreinigungen abgeschieden, wodurch der zu dem Filterelement gelangende Gasstrom bereits vorgereinigt ist und das Filterelement über ein Filtermedium verfügen kann, welches feinste Verunreinigungen aus dem Gasstrom entfernen kann. Dadurch ist ein optimal gereinigter Gasstrom zu erzeugen, welcher auch höhere Anforderungen an die Reinheit des Gasstromes erfüllt.

Gemäß einer Weiterbildung der Erfindung sind die Lamellen des Vorabscheiders in ihrer Längsrichtung winklig zur Anströmrichtung des zu reinigenden Gases angeordnet. Die Anströmrichtung des zu reinigenden Gases ergibt sich aus der Lage des Einlasses im Gehäuse. Bei der winkligen Anordnung der Lamellen ist es besonders vorteilhaft, wenn die Lamellen in einem beliebigen Winkel zwischen 20° und 80°, bezogen auf die Gasströmung, angeordnet sind. Hierbei verläuft die Neigung der Lamellen in Richtung der Unterseite des Gehäuses. Durch diese Neigung der Lamellen wird erreicht, dass die abgeschiedenen Verunreinigungen an den Lamellen entlang geführt werden, wobei die Gasströmung und die Gewichtskraft der Verunreinigungen zu einem schnellen und sicheren Austragen der Verunreinigungen aus dem Gehäuse beitragen.

Bei einer weiteren Ausgestaltung der Erfindung sind die durch den Vorabscheider aus dem Gasstrom entfernten Verunreinigungen durch einen Austrag aus dem Gehäuse entfernbar. Hierbei ist es besonders vorteilhaft, wenn die Lamellen bis zu dem Austrag reichen. Der Austrag, welcher insbesondere an der tiefsten Stelle im Gehäuse angeordnet ist, kann z.B. durch eine verschließbare Öffnung im Gehäuse gebildet werden. Hierbei ist es vorteilhaft, wenn der Austrag mit einem Ventil, z.B. einer Schwenk-Klappe, einem Schnabelventil oder einem elektrisch angesteuertem Magnetventil öffen- und verschließbar ausgeführt ist. Dadurch kann der Austrag nur bei Bedarf geöffnet und die Verunreinigungen entfernt werden. Der Austrag kann mit einem Sammelbehälter verbunden sein, wobei die Verbindung zwischen dem Austrag und dem Sammelbehälter mit einem Schlauchstück überbrückt werden kann.

Gemäß einer vorteilhaften Ausgestaltung der Erfindung ist der Austrag mit einer Austragsspirale verbunden. Durch die Austragsspirale werden die Verunreinigungen, insbesondere Flüssigkeiten, aus dem Gehäuse ausgetragen. Hierzu besitzt die Austragsspirale eine Öffnung, welche möglicht an einem Tiefpunkt in dem Gehäuse angeordnet ist. Der Tiefpunkt kann durch eine in Drallrichtung schräg verlaufende Ebene, insbesondere eine Spirale, im Gehäuseboden gebildet werden. Von der Öffnung aus erstreckt sich ein Spiralbereich, in welchem sich die Verunreinigungen ansammeln. Der Spiralbereich erstreckt sich vorzugsweise um 360°, wodurch das untere Ende der Spirale unter dem Eintritt in die Spirale angeordnet ist. Dadurch haben die Verunreinigungen einen axialen Weg, welcher der Steigung der Spirale entspricht, zurückgelegt. Bestehen die Verunreinigungen aus Flüssigkeiten mit niedrigen Viskositäten wie z.B. Wasser, dann baut sich in der Austragsspirale ein Druck auf, welcher ausreicht um ein, am Ende der Austragsspirale angeordnetes Ventil zu öffnen. Dadurch regelt sich der Austrag der Verunreinigungen aus dem Gehäuse selbst, so dass eine aufwendige Regelvorrichtung eingespart werden kann. Zusätzlich zu dem durch die Verunreinigungen aufgebauten Druck wirkt bei einem als Zyklon aufgebauten Gehäuse auch noch die Gasströmung, welche tangential auf den Eintritt in die Austragsspirale wirkt, auf die Austragsspirale. Hierbei ist es vorteilhaft, wenn im Bereich des Eintritts in die Spirale eine Trennwand angeordnet ist, welche zur Beruhigung der Verunreinigungen dient. Die durch die Trennwand gebildete Beruhigungszone bewirkt, dass Verunreinigungen nicht von dem Eintritt in die Spirale fortgerissen werden können, wodurch der Austrag der Verunreinigungen aus dem Gehäuse begünstigt wird.

### Zeichnung

Weitere Einzelheiten der Erfindung werden in der Zeichnung anhand von schematischen Ausführungsbeispielen beschrieben. Hierbei zeigt
- Figur 1: eine schematische Darstellung einer Vorrichtung zur Reinigung eines Gases
- Figur 2: eine schematische Darstellung einer Vorrichtung zur Reinigung eines Gases
- Figur 3: einen schematischen Aufbau eines Vorabscheiders
- Figur 4: einen alternativen Aufbau eines Vorabscheiders
- Figur 5: einen schematischen Vorabscheider in der Seitenansicht
- Figur 6: eine schematische Darstellung einer Vorrichtung zur Reinigung eines Gases.

### Beschreibung der Ausführungsbeispiele

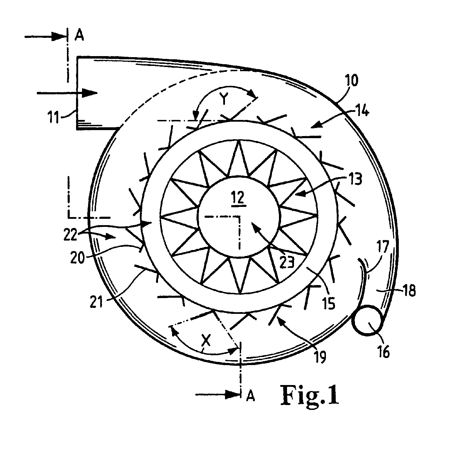

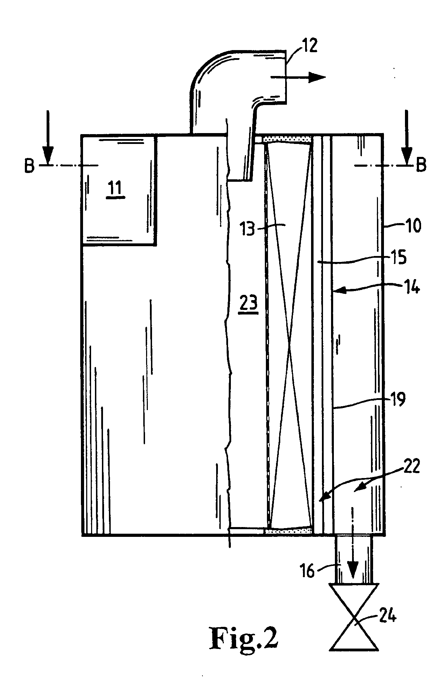

In Figur 1 ist eine Vorrichtung zur Reinigung eines Gases schematisch in der Draufsicht gemäß der Schnittlinie B-B aus Figur 2 dargestellt. Die Vorrichtung verfügt über ein Gehäuse 10, welches als Zyklon ausgebildet ist. Das Gehäuse 10, welches aus Kunststoff besteht, verfügt über einen Einlass 11 und einen Auslass 12. In dem Gehäuse 10 ist ein Filterelement 13 mit einem zickzack-förmig gefalteten Filtermedium und ein Vorabscheider 14 angeordnet, wobei beide Bauteile 13, 14 zylindrisch ausgebildet sind. Der Vorabscheider 14 ist zwischen dem Einlass 11 und dem Filterelement 13 angeordnet, wobei er das Filterelement 13 unter Bildung eines ringförmigen Zwischen-Volumens 15 vollständig umgibt. Das Gehäuse 10 verfügt neben dem Einlass 11 und Auslass 12 noch über einen Austrag 16, durch welchen Verunreinigungen, welche z.B. an der Gehäusewand aus dem Gasstrom abgeschieden wurden, aus dem Gehäuse 10 entfernt werden können. Damit die Verunreinigungen, welche z.B. Wassertropfen oder Staub sein können, nicht durch die Gasströmung verwirbelt werden, ist eine Trennwand 17 vorgesehen. Diese Trennwand 17 bildet mit dem Gehäuse 10 eine Beruhigungszone 18, welche in Gasströmungsrichtung geöffnet ist. So können die Verunreinigungen durch die Gasströmung in die Beruhigungszone eingetragen, jedoch nicht wieder ausgetragen werden.

Der zylindrisch ausgebildete Vorabscheider 14 verfügt über Lamellen 19, welche am Umfang des Vorabscheiders 14 parallel zueinander angeordnet sind. Jede Lamelle 19 verfügt über einen ersten Lamellenbereich 20 und einen zweiten Lamellenbereich 21. Der erste Lamellenbereich 20 ist in Strömungsrichtung gesehen vor dem zweiten Lamellenbereich 21 angeordnet. Beide Lamellenbereiche 20, 21 sind winklig zueinander angeordnet. Hierbei beträgt der Winkel X zwischen den Lamellenbereichen 20, 21 ca. 90° bis 150°, wobei ein Winkel von 135° vorteilhaft ist. Der erste Lamellenbereich 20 ist kürzer als der zweite Lamellenbereich 21 ausgeführt. Bezogen auf die Tangente der Gasströmung ist der zweite Lamellenbereich 21, an welchem sich die Verunreinigungen hauptsächlich abscheiden, in einem Winkel Y von 90° bis 150° angeordnet. Dadurch sind optimale Abscheidegrade durch den Vorabscheider realisierbar.

Das zu reinigende Gas, welches z.B. die Ansaugluft für eine Brennkraftmaschine eines Kraftfahrzeuges ist, tritt durch den Einlass 11 in das Gehäuse 10 ein. Da das Gehäuse 10 als Zyklon ausgebildet ist, wird das Gas in Rotation versetzt, wodurch die in dem Gas enthaltenen groben Verschmutzungen durch die Fliehkraft an der Gehäusewand abgeschieden werden. Die Strömungsrichtung des Gases wird durch die Lamellen 19 umgelenkt, wodurch die noch in dem Gas enthaltenen groben Verunreinigungen beschleunigt und an den Lamellen 19 abgeschieden werden. Erst nachdem das Gas durch den Vorabscheider hindurch getreten ist, gelangt es zu dem Filterelement 13, welches derart in dem Gehäuse 10 angeordnet ist, dass eine Rohseite 22 dichtend von einer Reinseite 23 getrennt ist. Die Rohseite 22 ist korrespondierend mit dem Einlass 11 und die Reinseite 23 ist korrespondierend mit dem Auslass 12 verbunden. Die Rohseite 22 umfasst zwei Bereiche. Der erste Bereich ist durch das Gehäuse 10 mit dem Vorabscheider 14 gebildet. Der zweite Bereich ist das Zwischen-Volumen 15, welches durch den Vorabscheider 14 und das Filterelement 13 gebildet ist. Beide Bereiche sind Teil der Rohseite 22. Der Gasstrom wird beim durchströmen des Filterelementes 13 von feinsten Verunreinigungen befreit. Das vollständig gereinigte Gas strömt anschließend durch den Auslass 12 aus dem Gehäuse 10 und kann z.B. einer Brennkraftmaschine (nicht dargestellt) zugeführt werden.

In Figur 2 ist eine Vorrichtung zur Reinigung eines Gases entlang der Schnittlinie A-A gemäß Figur 1 schematisch dargestellt. Der Figur 1 entsprechende Bauteile sind mit gleichen Bezugszeichen versehen. Der Auslass 12 ist als Rohrstutzen ausgebildet und ragt in die Reinseite 23 hinein. Der Austrag 16 ist mit einem Ventil 24 verschließbar. Das Ventil 24 ist bei diesem Ausführungsbeispiel ein Magnetventil, welches mit einer Steuerung bzw. Regelung (nicht dargestellt) geöffnet bzw. geschlossen werden kann.

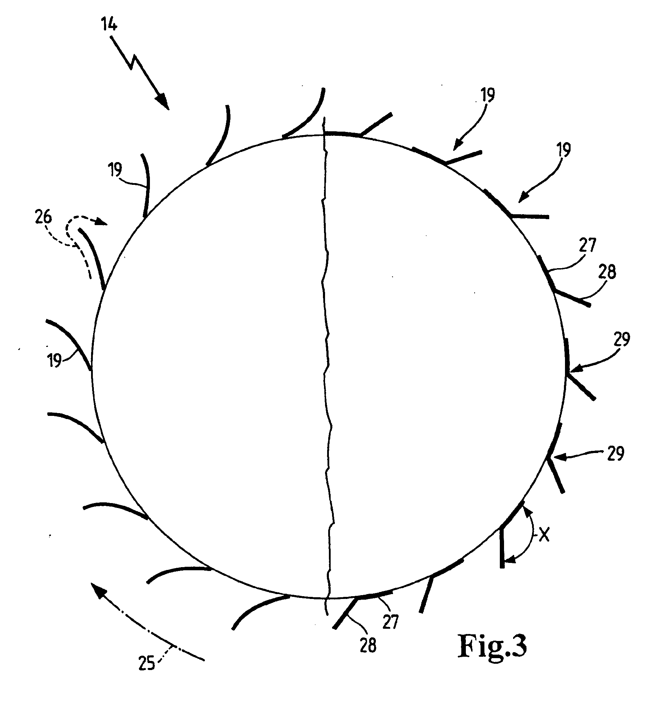

In Figur 3 ist der Aufbau eines zylindrischen Vorabscheiders 14 schematisch dargestellt, wobei die linke Figurenhälfte eine andere Ausführung darstellt, als die rechte Figurenhälfte. Die Gasströmung ist als Pfeil 25, welcher im Uhrzeigersinn verläuft, dargestellt.

Die linke Figurenhälfte des Vorabscheiders 14 zeigt, gebogene Lamellen 19. Hierbei sind die Lamellen 19 derart gestaltet, dass die Lamellen 19 in Strömungsrichtung gesehen zunächst über einen Bereich mit einer geringen konkaven Wölbung verfügen. Jede Lamelle 19 krümmt sich in ihrem Verlauf ohne Wendepunkte weiter nach außen, wobei die konkave Wölbung verstärkt wird. Die in Pfeilrichtung 25 strömende Luft wird durch die Lamellen 19 nach außen abgelenkt. Durch die Druckdifferenz zwischen dem Einlass 11 und dem Auslass 12 gemäß den Figuren 1 und 2 wird Luft in das Innere des Vorabscheiders 14 gesaugt oder gedrückt. Hierbei erfährt die Luftströmung eine starke Umlenkung, welche durch den gepunkteten Pfeil 26 dargestellt ist. Durch diese Umlenkung werden die in der Luft enthaltenen Wasser- oder Staubpartikel so stark beschleunigt, dass sie nicht mit der Luftströmung auf die Innenseite des Vorabscheiders 14 gelangen können, sondern an der nachfolgend angeordneten Lamelle 19 abgeschieden werden.

Auf der rechten Bildhälfte sind die Lamellen 19 in einer anderen Ausführung dargestellt. Die Lamellen 19 der rechten Bildhälfte verfügen über einen ersten Lamellenbereich 27, welcher entlang einer zylindrischen Mantellinie des Vorabscheiders verläuft. Ein zweiter Lamellenbereich 28 verläuft winklig zu dem ersten Lamellenbereich 27 und bewirkt die Umlenkung der Luftströmung. Beide Lamellenbereiche 27, 28 besitzen ca. die gleiche Länge. Der Winkel X in welchem die beiden Lamellenbereiche 27, 28 zueinander angeordnet sind beträgt ca. 135°. Durch die winklige Anordnung der beiden Lamellenbereiche 27, 28 zueinander entsteht eine Ablaufrinne 29, entlang welcher die abgeschiedenen Verunreinigungen ausgetragen werden. Der erste Lamellenbereich 27 beginnt lotrecht unterhalb des Endes des zweiten Lamellenbereiches, wodurch keine Überlappung der Lamellen 19 erfolgt.

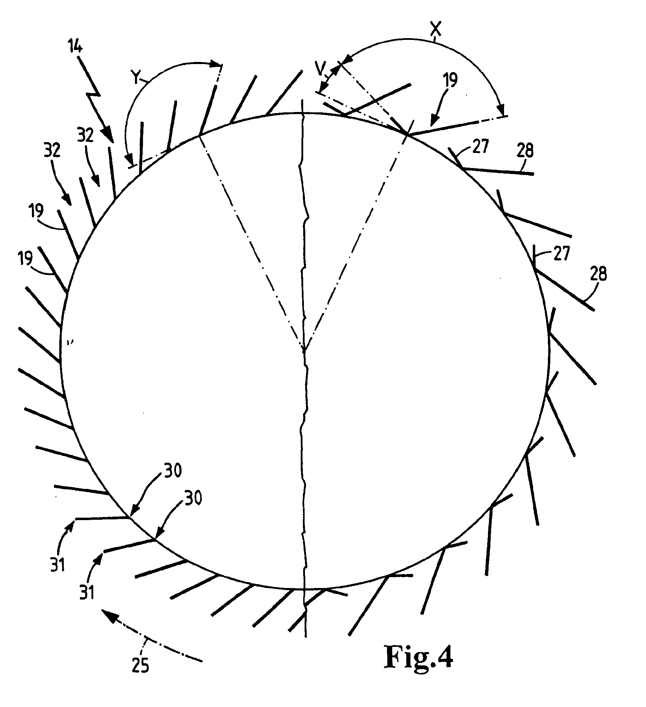

In Figur 4 ist ein alternativer Aufbau eines Vorabscheiders dargestellt, wobei die beiden Figurenhälften unterschiedliche Ausführungen darstellen.

Auf der linken Bildhälfte sind Lamellen 19 dargestellt, welche als ebene Flächen, ohne Wölbungen, ausgebildet sind. Diese Lamellen 19 sind in Strömungsrichtung in einem Winkel Y von ca. 130° bezogen auf die zylindrische Mantellinie des Vorabscheiders angeordnet. Jede Lamelle 19 verfügt über einen Anfang 30 und ein Ende 31. Das Ende 31 überragt den Anfang 30 der nachfolgenden Lamelle 19, wodurch eine Überlappung der Lamellen 19 entsteht. Je weiter sich die Lamellen 19 überlappen, desto stärker wird der Gasstrom umgelenkt, wodurch mehr Verunreinigungen abgeschieden werden. Je enger der sich zwischen den nebeneinander angeordneten Lamellen 19 ergebende Spalt 32 ist, desto größer ist der Abscheidegrad des Vorabscheiders.

Auf der rechten Bildhälfte sind die Lamellen 19 derart ausgebildet, dass sie, wie die in Figur 3, rechte Bildhälfte dargestellten Lamellen 19, über einen ersten Lamellenbereich 27 und einen zweiten Lamellenbereich 28 verfügen. Im Unterschied zu den in Figur 3, rechte Bildhälfte dargestellten Lamellen 19 ist der erste Bereich 27 winklig zu der zylindrischen Mantellinie angeordnet, wobei ein Winkel V von ca. 20° vorgesehen ist. Der zweite Lamellenbereich 28 ist in einem Winkel X von ca. 120° bezogen auf den ersten Lamellenbereich 27 angeordnet. Ein weiterer Unterschied zu den in Figur 3, rechte Bildhälfte dargestellten Lamellen 19 besteht darin, dass der zweite Lamellenbereich 28 den ersten Lamellenbereich 27 der benachbarten Lamelle 19 lotrecht zumindest teilweise überdeckt. Hierbei kann auch eine vollständige Überdeckung des ersten Lamellenbereiches 27 durch den zweiten Lamellenbereich 28 der benachbarten Lamelle 19 erfolgen. Bei weiteren nicht dargestellten Ausführungen ist auch eine teilweise Überdeckung des zweiten Lamellenbereiches 28 durch die vorangehende benachbarte Lamelle 19 denkbar.

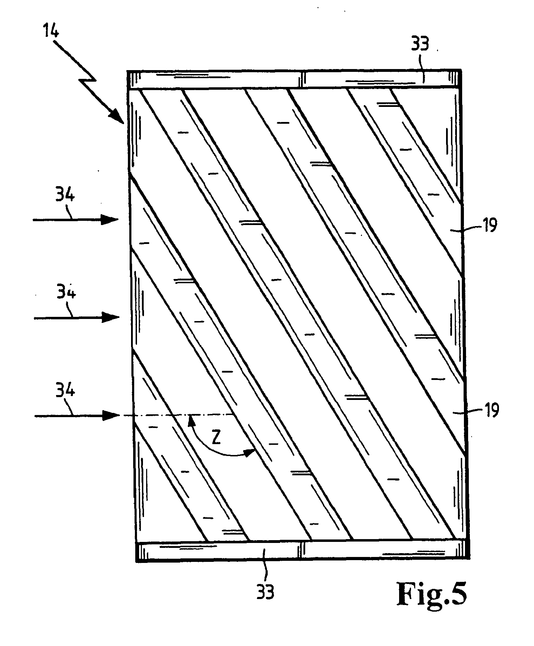

In Figur 5 ist ein Vorabscheider 14 in der Seitenansicht schematisch dargestellt. Der Vorabscheider 14 verfügt über einen oberen und einen unteren Stützbereich 33. Diese Stützbereiche 33 sind kreisring-förmig ausgebildet, wobei die Lamellen 19 sowohl mit dem unteren, als auch mit dem oberen Stützbereich 33 verbunden sind. Bei diesem Ausführungsbeispiel verlaufen die Lamellen 19 winklig zur Strömungsrichtung des zu reinigenden Gases, wobei die Strömungsrichtung durch die Pfeile 34 angedeutet ist. Der Winkel Z der Lamellen 19 bezüglich der Strömungsrichtung ist in einem Bereich von 90° bis 135° angeordnet, wobei ein Winkel von vorzugsweise 120° vorgesehen ist. Durch diese Anordnung der Lamellen 19 werden die abgeschiedenen Verunreinigungen zu dem unteren Stützbereich 33 getragen, von wo aus sie in das Gehäuse (nicht dargestellt) gelangen. Die Lamellen 19 können beliebig, insbesondere gemäß den Figuren 3 und 4 Ausgeführt sein.

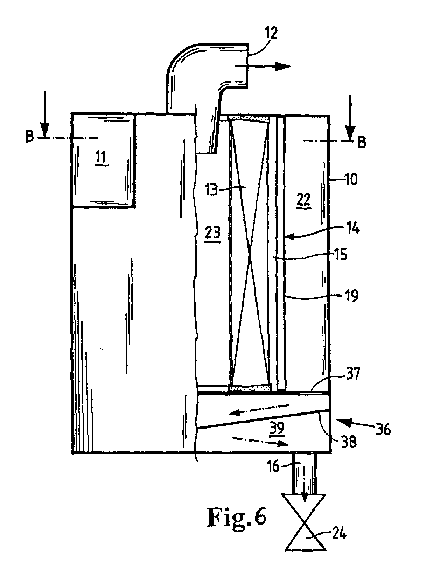

In Figur 6 ist eine schematische Vorrichtung zur Reinigung eines Gasstromes im Halbschnitt dargestellt. Der Figur 2 entsprechende Bauteile sind mit gleichen Bezugszeichen versehen. Bei diesem Ausführungsbeispiel ist eine Austragsspirale 36 vorgesehen, welche über eine Durchtrittsöffnung 37 mit der Rohseite 22 korrespondiert. Durch die Durchtrittsöffnung 37 gelangen die in dem Gehäuse 10 abgeschiedenen Verunreinigungen in die Austragsspirale 36. In der Austragsspirale 36 fließen die Verunreinigungen entlang der schrägen Flächen 38 nach unten. Im unteren Bereich 39 der Austragsspirale 36 sind die Verunreinigungen derart gestaut, dass keine Turbulenzen mehr auftreten. Daher können die vollständig beruhigten Verunreinigungen durch den Austrag 16 aus der Vorrichtung ausgetragen werden.

## Patentansprüche

1. Vorrichtung zur Reinigung eines Gasstromes, insbesondere für eine Brennkraftmaschine, aufweisend ein Gehäuse (10), ein Filterelement (13) und einen Vorabscheider (14),
- wobei das Gehäuse (10) über einen Einlass (11) und einen Auslass (12) verfügt,
- wobei das Filterelement (13) in dem Gehäuse (10) angeordnet ist und eine Reinseite (23) dichtend von einer Rohseite (22) trennt,
- wobei die Rohseite (22) korrespondierend mit dem Einlass (11) und die Reinseite (23) korrespondierend mit dem Auslass (12) verbunden ist,
- wobei der Vorabscheider (14) zwischen dem Einlass (11) und dem Filterelement (13) angeordnet ist, und
- der Vorabscheider (14) über Lamellen (19) verfügt, welche parallel zueinander angeordnet sind, wobei durch die Lamellen (19) der Gasstrom in seiner Strömungsrichtung umlenkbar ist, **dadurch gekennzeichnet, dass** das Gehäuse (10) als Zyklon ausgebildet ist und das Filterelement (13) ein Rundfilterelement ist, welches konzentrisch von dem Vorabscheider (14) umschlossen ist.

2. Vorrichtung nach Anspruch 1, **dadurch gekennzeichnet, dass** die Lamellen (19) sich in einem Teilbereich überlappen.

3. Vorrichtung nach einem der vorangehenden Ansprüche, **dadurch gekennzeichnet, dass** die Lamellen (19) über zwei Lamellenbereiche (20,21) verfügen, welche winklig zueinander angeordnet sind.

4. Vorrichtung nach einem der vorangehenden Ansprüche, **dadurch gekennzeichnet, dass** der Vorabscheider (14) parallel zu dem Filterelement (13) angeordnet ist.

5. Vorrichtung nach einem der vorangehenden Ansprüche, **dadurch gekennzeichnet, dass** das Filterelement (13) und der Vorabscheider (14) exzentrisch in dem Gehäuse (10) angeordnet ist.

6. Vorrichtung nach einem der vorangehenden Ansprüche, **dadurch gekennzeichnet, dass** die Lamellen (19) des Vorabscheiders (14) in ihrer Längsrichtung winklig zur Anströmrichtung des zu reinigenden Gases angeordnet sind, wobei die Anströmrichtung durch die Lage des Einlasses (11) definiert ist.

7. Vorrichtung nach einem der vorangehenden Ansprüche, **dadurch gekennzeichnet, dass** das Gehäuse (10) über einen Austrag (16) verfügt, durch welchen die durch den Vorabscheider (14) aus dem Gasstrom entferten Verunreinigungen entfernbar sind.

8. Vorrichtung nach Anspruch 7, **dadurch gekennzeichnet, dass** der Austrag (16) mit einer Austragsspirale verbunden ist, durch welche die Verunreinigungen, insbesondere Flüssigkeiten, aus dem Gehäuse (10) austragbar sind.

## Claims

1. Apparatus for filtering a gas flow, more especially for an internal combustion engine, the said apparatus including a housing (10), a filter element (13) and a pre-separator (14),
- wherein the housing (10) has an inlet (11) and an outlet (12)
- wherein the filter element (13) is disposed in the housing (10) and separates a filtered side (23) from a non-filtered side (22) in a sealing manner,
- wherein the non-filtered side (22) is connected in a corresponding manner to the inlet (11) and the filtered side (23) is connected in a corresponding manner to the outlet (12),
- wherein the pre-separator (14) is disposed between the inlet (11) and the filter element (13), and
- the pre-separator (14) has lamellae (19), which are disposed parallel to one another, wherein the direction of the gas flow is divertible by means of the lamellae (19), **characterised in that** the housing (10) is a cyclone and the filter element (13) is a circular filter element, which is surrounded concentrically by the pre-separator (14).

2. Apparatus according to claim 1, **characterised in that** the lamellae (19) overlap each other in a part region.

3. Apparatus according to one of the preceding claims, **characterised in that** the lamellae (19) have two lamella regions (20, 21), which are disposed at an angle one relative to the other.

4. Apparatus according to one of the preceding claims, **characterised in that** the pre-separator (14) is disposed parallel to the filter element (13).

5. Apparatus according to one of the preceding claims, **characterised in that** the filter element (13) and the pre-separator (14) are disposed eccentrically in the housing (10).

6. Apparatus according to one of the preceding claims, **characterised in that** the lamellae (19) of the pre-separator (14) are disposed in their longitudinal direction at an angle relative to the direction of the incoming flow of the gas to be filtered, wherein the direction of the incoming flow is defined by the position of the inlet (11).

7. Apparatus according to one of the preceding claims, **characterised in that** the housing (10) has a discharge (16), through which the contamination, removed from the gas flow by means of pre-separator (14), can be removed.

8. Apparatus according to claim 7, **characterised in that** the discharge (16) is connected to a discharge spiral, by means of which the contamination, in particular fluids, can be discharged out of the housing.

## Revendications

1. Dispositif de nettoyage d'un courant gazeux, notamment d'un moteur à combustion interne, comportant un boîtier (10), un élément de filtre (13) et un séparateur amont (14),
- le boîtier (10) a une entrée (11) et une sortie (12),
- l'élément de filtre (13) est logé dans le boîtier (10) et sépare de manière étanche un côté filtré (23) par rapport à un côté non filtré (22),
- le côté non filtré (22) est relié de façon correspondante à l'entrée (11) et le côté filtré (23) est relié de manière correspondante à la sortie (12),
- le séparateur amont (14) est installé entre l'entrée (11) et l'élément de filtre (13) et
- le séparateur amont (14) comporte des lamelles (19) installées parallèlement les unes aux autres et elles (19) assurent la déviation de la direction du courant gazeux,
**caractérisé en ce que** le boîtier (10) est en forme de cyclone et l'élément de filtre (13) est un élément de filtre circulaire entouré de manière concentrique par le séparateur amont (14).

2. Dispositif selon la revendication 1, **caractérisé en ce que** les lamelles (19) se chevauchent dans une zone partielle.

3. Dispositif selon l'une des revendications précédentes, **caractérisé en ce que** les lamelles (19) comportent deux zones de lamelles (20, 21) qui font un angle l'une par rapport à l'autre.

4. Dispositif selon l'une des revendications précédentes, **caractérisé en ce que** le séparateur amont (14) est installé parallèlement à l'élément de filtre (13).

5. Dispositif selon l'une des revendications précédentes, **caractérisé en ce que** l'élément de filtre (13) et le séparateur amont (14) sont installés de manière excentré dans le boîtier (10).

6. Dispositif selon l'une des revendications précédentes, **caractérisé en ce que** les lamelles (19) du séparateur amont (14) sont installées dans la direction longitudinale, avec un angle par rapport à la direction du courant du gaz à nettoyer et la direction d'attaque est définie par la position de l'entrée (11).

7. Dispositif selon l'une des revendications précédentes, **caractérisé en ce que** le boîtier (10) comporte une sortie (16) permettant d'évacuer les impuretés séparées du courant gazeux dans le séparateur amont (14).

8. Dispositif selon la revendication 7, **caractérisé en ce que** la sortie (16) est reliée à une spirale de sortie permettant d'évacuer les impuretés, notamment les liquides hors du boîtier (10).
